Europäisches Patentamt

European Patent Office

Office européen des brevets

(19)

(11) **EP 1 078 355 B1**

(12) **EUROPÄISCHE PATENTSCHRIFT**

(45) Veröffentlichungstag und Bekanntmachung des Hinweises auf die Patenterteilung:
**02.10.2002   Patentblatt 2002/40**

(51) Int Cl.$^7$: **G10L 15/14**

(21) Anmeldenummer: **99929087.7**

(86) Internationale Anmeldenummer:
**PCT/DE99/01307**

(22) Anmeldetag: **03.05.1999**

(87) Internationale Veröffentlichungsnummer:
**WO 99/059141 (18.11.1999 Gazette 1999/46)**

(54) **VERFAHREN UND ANORDNUNG ZUR EINFÜHRUNG ZEITLICHER ABHÄNGIGKEIT IN HIDDEN-MARKOV-MODELLEN FÜR DIE SPRACHERKENNUNG**

METHOD AND ARRAY FOR INTRODUCING TEMPORAL CORRELATION IN HIDDEN MARKOV MODELS FOR SPEECH RECOGNITION

PROCEDE ET DISPOSITIF POUR INTRODUIRE UNE CORRELATION TEMPORELLE DANS DES MODELES DE MARKOV A DES FINS DE RECONNAISSANCE DE LA PAROLE

(84) Benannte Vertragsstaaten:
**DE FR GB**

(30) Priorität: **11.05.1998   DE 19821030**

(43) Veröffentlichungstag der Anmeldung:
**28.02.2001   Patentblatt 2001/09**

(73) Patentinhaber: **SIEMENS AKTIENGESELLSCHAFT 80333 München (DE)**

(72) Erfinder:
• **JUNKAWITSCH, Jochen D-80809 München (DE)**
• **HÖGE, Harald D-82131 Gauting (DE)**

(56) Entgegenhaltungen:
• **JUNKAWITSCH J ET AL: "Keyword verification considering the correlation of succeeding feature vectors" PROCEEDINGS OF THE 1998 IEEE INTERNATIONAL CONFERENCE ON ACOUSTICS, SPEECH AND SIGNAL PROCESSING, ICASSP '98 (CAT. NO.98CH36181), PROCEEDINGS OF THE 1998 IEEE INTERNATIONAL CONFERENCE ON ACOUSTICS, SPEECH AND SIGNAL PROCESSING, SEATTLE, WA, USA, 12-1, Seiten 221-224 vol.1, XP002117602 1998, New York, NY, USA, IEEE, USA ISBN: 0-7803-4428-6**
• **KENNY P ET AL: "A LINEAR PREDICTIVE HMM FOR VECTOR-VALUED OBSERVATIONS WITH APPLICATIONS TO SPEECH RECOGNITION" IEEE TRANSACTIONS ON ACOUSTICS, SPEECH AND SIGNAL PROCESSING, Bd. 38, Nr. 2, 1. Februar 1990 (1990-02-01), Seiten 220-225, XP000113161**
• **PALIWAL K K: "USE OF TEMPORAL CORRELATION BETWEEN SUCCESSIVE FRAMES IN A HIDDEN MARKOV MODEL BASED SPEECH RECOGNIZER" SPEECH PROCESSING, MINNEAPOLIS, APR. 27 - 30, 1993, Bd. 2, 27. April 1993 (1993-04-27), Seiten II-215-218, XP000427764 INSTITUTE OF ELECTRICAL AND ELECTRONICS ENGINEERS ISBN: 0-7803-0946-4**
• **WELLEKENS C J: "Explicit time correlation in hidden Markov models for speech recognition" PROCEEDINGS: ICASSP 87. 1987 INTERNATIONAL CONFERENCE ON ACOUSTICS, SPEECH, AND SIGNAL PROCESSING (CAT. NO.87CH2396-0), DALLAS, TX, USA, 6-9 APRIL 1987, Seiten 384-386 vol.1, XP002117603 1987, New York, NY, USA, IEEE, USA**
• **CHIN-HUI LEE ET AL: "A NETWORK-BASED FRAME-SYNCHRONOUS LEVEL BUILDING ALGORITHM FOR CONNECTED WORD RECOGNITION" SPEECH PROCESSING, NEW YORK, APR. 11 - 14, 1988, Bd. 1, Nr. CONF. 13, 11. April 1988 (1988-04-11), Seiten 410-413, XP000272574 INSTITUTE OF ELECTRICAL AND ELECTRONICS ENGINEERS**

**Beschreibung**

Die Erfindung betrifft ein Verfahren und eine Anordnung zur Erkennung gesprochener Sprache durch einen Rechner.

Ein Verfahren und eine Anordnung zur Erkennung gesprochener Sprache sind aus [1] bekannt. Bei der Erkennung gesprochener Sprache werden, insbesondere bis zum Erhalt einer erkannten Wortfolge aus einem digitalisierten Sprachsignal, eine Signalanalyse und eine globale Suche, die auf ein akustisches Modell und ein linguistisches Modell der zu erkennenden Sprache zurückgreift, durchgeführt. Das akustische Modell basiert auf einem Phoneminventar, umgesetzt mit Hilfe von Hidden-Markov-Modellen (HMMs), und einem Aussprachelexikon, umgesetzt als ein Baumlexikon. Das linguistische Modell beinhaltet eine Trigrammstatistik, d.h. eine Abfolge aus drei Wörtern. Während der globalen Suche für Merkmalsvektoren, die aus der Signalanalyse hervorgegangen sind, werden mit Hilfe des akustischen Modells die wahrscheinlichsten Wortfolgen ermittelt und diese als erkannte Wortfolge ausgegeben. Der dargestellte Zusammenhang wird ausführlich in [1] erläutert.

Um die nachfolgenden Ausführungen nachvollziehen zu können, wird an dieser Stelle kurz auf die verwendeten Begriffe eingegangen.

Die Signalanalyse als Phase der computerbasierten Spracherkennung umfaßt insbesondere eine Fouriertransformation des digitalisierten Sprachsignals und eine sich daran anschließende Merkmalsextraktion. Aus [1] geht hervor, daß die Signalanalyse alle zehn Millisekunden erfolgt. Aus sich überlappenden Zeitabschnitten mit einer Dauer von z.B. jeweils 25 Millisekunden werden anhand der Signalanalyse ungefähr 30 Merkmale ermittelt und zu einem Merkmalsvektor zusammengefaßt. Z.B. gehen bei einer Abtastfrequenz von 16kHz 400 Signal-Amplitudenwerte in die Berechnung eines Merkmalsvektors ein. Die Komponenten des Merkmalsvektors beschreiben insbesondere die spektrale Energieverteilung des zugehörigen Signalausschnitts. Um zu dieser Energieverteilung zu gelangen, wird auf jedem Signalausschnitt (25ms-Ausschnitt) eine Fouriertransformation durchgeführt. Somit erhält man die Darstellung des Signals im Frequenzbereich und damit die Komponenten des Merkmalsvektors. Nach der Signalanalyse liegt also das digitalisierte Sprachsignal in Form von Merkmalsvektoren vor.

Diese Merkmalsvektoren werden der globalen Suche, einer weiteren Phase der Spracherkennung, zugeführt. Wie bereits erwähnt, bedient sich die globale Suche des akustischen Modells und ggf. des linguistischen Modells, um die Folge von Merkmalsvektoren auf Einzelteile der als Modell vorliegenden Sprache (Vokabular) abzubilden. Eine Sprache setzt sich aus einer vorgegebenen Anzahl vom Lauten, sog. Phonemen, zusammen, deren Gesamtheit als Phoneminventar bezeichnet wird. Das Vokabular wird durch Phonemfolgen modelliert und in einem Aussprachelexikon abgespeichert. Jedes Phonem wird durch mindestens ein HMM modelliert. Mehrere HMMs ergeben einen stochastischen Automaten, der Zustände und Zustandsübergänge (Transitionen) umfaßt. Mit HMMs läßt sich der zeitliche Ablauf des Auftretens bestimmter Merkmalsvektoren (selbst innerhalb eines Phonems) modellieren. Ein entsprechendes Phonem-Modell umfaßt dabei eine vorgegebene Anzahl von Zuständen, die linear hintereinander angeordnet sind. Ein Zustand eines HMMs stellt einen Teil eines Phonems (bspw. einen Ausschnitt von 10ms Länge) dar. Jeder Zustand ist verknüpft mit einer Emissionswahrscheinlichkeit, die insbesondere nach Gauß verteilt ist, für die Merkmalsvektoren und mit Transitionswahrscheinlichkeiten für die möglichen Übergänge. Mit der Emissionsverteilung wird einem Merkmalsvektor eine Wahrscheinlichkeit zugeordnet, mit der dieser Merkmalsvektor in einem zugehörigen Zustand beobachtet wird. Die möglichen Übergänge sind ein direkter Übergang von einem Zustand in einen nächsten Zustand, ein Wiederholen des Zustands und ein Überspringen des Zustands.

Die Aneinanderreihung der HMM-Zustände mit den zugehörigen Übergängen über die Zeit wird als Trellis bezeichnet. Um die akustische Wahrscheinlichkeit eines Wortes zu bestimmen, verwendet man das Prinzip der dynamischen Programmierung: Es wird der Pfad durch die Trellis gesucht, der den geringsten Fehler aufweist bzw. der durch die größte Wahrscheinlichkeit für ein zu erkennendes Wort bestimmt ist.

Parameter der Emissionsverteilungen werden anhand von Beispielsätzen in einer Trainingsphase bestimmt.

Neben dem beschriebenen akustischen Modell wird in der globalen Suche ggf. noch das Sprachmodell (auch: linguistisches Modell) berücksichtigt. Das Sprachmodell hat die Aufgabe, die linguistische Wahrscheinlichkeit einer Satzhypothese zu ermitteln. Hat eine Abfolge von Wörtern keinen Sinn, so hat diese Abfolge im Sprachmodell eine entsprechend geringe linguistische Wahrscheinlichkeit. Insbesondere werden Abfolgen von zwei Wörtern (Bigramme) oder von drei Wörtern (Trigramme) eingesetzt, um linguistische Wahrscheinlichkeiten für diese Bigramme bzw. Trigramme zu berechnen. Durch die nahezu beliebige Kombination von Wörtern des Vokabulars in Bigrammen, Trigrammen bzw. n-Grammen ist eine Speicherung aller n-Gramme letztlich eine Frage des zur Verfügung stehenden Speichers.

Das Ergebnis der globalen Suche ist die Ausgabe bzw. Bereitstellung einer erkannten Wortfolge, die sich unter Berücksichtigung des akustischen Modells (Phoneminventar) und des Sprachmodells ergibt.

Bei einem HMM wird von der Annahme ausgegangen, daß eine Emissionswahrscheinlichkeit für einen Merkmalsvektor nur von einem Zustand abhängt. Durch diese Annahme ergeben sich Modellierungsfehler, die sich gemäß obigen Ausführungen auf die erkannte Wortfolge signifikant auswirken.

Kenny et al.: "Linear Predictive HMM for Vector-Valued Observations with Applications to Speech Recognition", IEEE Transactions on ASSP, Band 38, 1990, Seiten 220 bis 225, offenbart ein Verfahren zur Erkennung gesprochener Sprache durch einen Rechner, bei dem Merkmalsvektoren zur Beschreibung eines digitalisierten Sprachsignals in Abhängigkeit einer Anzahl vorhergehender Merkmalsvektoren berechnet werden.

Die Aufgabe der Erfindung besteht darin, eine Anordnung und ein Verfahren zur Spracherkennung anzugeben, die oder das gegenüber dem Stand der Technik eine verbesserte Erkennung anhand modifizierter Hidden-Markov-Modelle ermöglicht.

Diese Aufgabe wird gemäß den Merkmalen der unabhängigen Patentansprüche gelöst.

Zur Lösung der Aufgabe wird ein Verfahren zur Erkennung gesprochener Sprache durch einen Rechner angegeben, bei dem aus der gesprochenen Sprache ein digitalisiertes Sprachsignal bestimmt wird und mit dem digitalisierten Sprachsignal eine Signalanalyse durchgeführt wird, wobei Merkmalsvektoren zur Beschreibung des digitalisierten Sprachsignals ermittelt werden. Bei einer globalen Suche zur Abbildung der Merkmalsvektoren auf eine in modellierter Form vorliegende Sprache wird jedes Phonem der Sprache durch ein modifiziertes Hidden-Markov-Modell beschrieben. Dabei umfaßt das modifizierte Hidden-Markov-Modell eine bedingte Wahrscheinlichkeit eines Merkmalsvektors abhängig von einer vorgegebenen Anzahl vorhergehender Merkmals vektoren. Die gesprochene Sprache wird erkannt, indem als Ergebnis der globalen Suche eine erkannte Wortfolge bereitgestellt wird.

Dabei ist es ein entscheidender Vorteil, daß anhand der Beschreibung des modifizierten Hidden-Markov-Modells durch Berücksichtigung einer Korrelation vorhergehender Merkmalsvektoren ein gegenüber der aus dem Stand der Technik bekannten Modellierung des Hidden-Markov-Modells (siehe Beschreibungseinleitung) deutlich bessere Erkennungsrate belegt werden kann.

Eine Ausgestaltung der Erfindung besteht darin, daß das modifizierte Hidden-Markov-Modell zusätzlich eine bedingte Wahrscheinlichkeit jedes Zustandes umfaßt. Durch Berücksichtigung zurückliegender Merkmalsvektoren und des jeweiligen HMM-Zustandes kommt eine deutliche Verbesserung der Spracherkennung zustande.

Das Verfahren dient insbesondere zur Erkennung von Schlüsselwörtern in gesprochener Sprache. Bei der Schlüsselworterkennung ist es wichtig, daß alle Schlüsselwörter aus einer vorgegebenen, abgeschlossenen Menge von Schlüsselwörtern (Englisch: Keywords) sicher erkannt werden. Bei Einsatz eines Spracherkennungssystems zur Einzelworterkennung im Rahmen einer sicherheitskritischen Anwendung, z.B. bei der Steuerung eines Fahrzeugs, ist es wichtig, daß die gesprochenen Kommandos verläßlich, d.h. mit geringem Fehler, erkannt werden und so eine ggf. zu fordernde Notfallsteuerung durch Spracheingabe gewährleistet ist.

Das Verfahren kann auch eingesetzt werden in der automatischen rechnergestützten Dialogführung. Bei der Dialogführung beschränkt man den Wortschatz vorzugsweise auf eine spezielle Anwendungsdomäne, z.B. Bankgeschäft, Hotelreservierung oder Mietwagenbestellung. Ein solches System muß eine hohe Benutzerakzeptanz sicherstellen, da bei wiederholtem Nichtverstehen eines Kunden die Gefahr besteht, daß dieser Benutzer das System nicht mehr verwendet. Insbesondere werden dabei die relevanten Wörter in der gesprochenen Sprache erkannt, wobei diese fließend und sprecherunabhängig geäußert werden kann.

Sowohl bei der automatischen Erkennung von Schlüsselwörtern als auch bei der rechnergestützten Dialogführung ist der Einsatz des hier vorgestellten Verfahrens vorteilhaft, da jeweils eine verbesserte Erkennungsleistung die Benutzerakzeptanz fördert und damit die Verbreitung von computerbasierten Spracherkennungssystemen fördert.

Weiterhin wird erfindungsgemäß eine Anordnung zur Erkennung gesprochener Sprache angegeben, die eine Einheit zur Signalanalyse aufweist, die derart eingerichtet ist, daß aus der gesprochenen Sprache Merkmalsvektoren bestimmbar sind. Weiterhin ist eine Einheit zur globalen Suche vorgesehen, die derart eingerichtet ist, daß die Merkmalsvektoren auf eine in modellierter Form vorliegende Sprache abbildbar ist. Schließlich weist die Anordnung eine Prozessoreinheit auf, die derart eingerichtet ist, daß ein modifiziertes Hidden-Markov-Modell eine bedingte Wahrscheinlichkeit für einen aktuellen Merkmalsvektor in Abhängigkeit von einer vorgegebenen Anzahl vorhergehender Merkmalsvektoren umfaßt, wobei mit dem modifizierten Hidden-Markov-Modell eine Abbildung der Merkmalsvektoren auf die in modellierter Form vorliegende Sprache durchführbar ist.

Eine Ausgestaltung der Anordnung besteht darin, daß die Prozessoreinheit derart eingerichtet ist, daß das modifizierte Hidden-Markov-Modell zusätzlich eine bedingte Wahrscheinlichkeit eines jeweils aktuellen Zustandes umfaßt.

Diese Anordnung/Vorrichtung ist insbesondere geeignet zur Durchführung des vorstehend erläuterten erfindungsgemäßen Verfahrens oder einer seiner Weiterbildungen.

Weiterbildungen der Erfindung ergeben sich auch aus den abhängigen Ansprüchen.

Ausführungsbeispiele der Erfindung werden nachfolgend anhand der Zeichnung dargestellt und erläutert.

Es zeigt

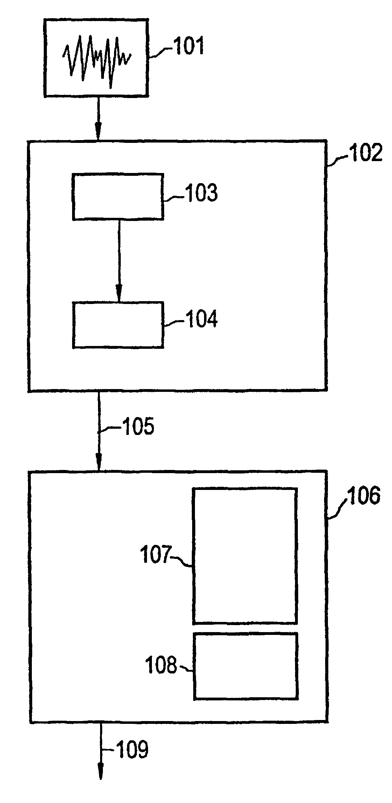

Fig.1    eine Anordnung bzw. ein Verfahren zur Erkennung gesprochener Sprache.

In **Fig.1** sind eine Anordnung bzw. ein Verfahren zur Erkennung gesprochener Sprache dargestellt. Zur Erläuterung der nachstehend verwendeten Begriffe wird hiermit auf die Beschreibungseinleitung verwiesen.

Ein digitalisiertes Sprachsignal 101 wird in einer Signalanalyse 102 einer Fouriertransformation 103 mit anschließender Merkmalsextraktion 104 unterzogen. Die Merkmalsvektoren 105 werden an ein System zur globalen Suche 106 übermittelt. Die globale Suche 106 berücksichtigt sowohl ein akustisches Modell 107 als auch ein linguistisches Modell 108 zur Bestimmung der erkannten Wortfolge 109. Aus dem digitalisierten Sprachsignal 101 wird demnach die erkannte Wortfolge 109.

In dem akustischen Modell 107 wird das Phoneminventar anhand von Hidden-Markov-Modellen nachgebildet.

Hidden-Markov-Modelle werden üblicherweise zur Modellierung der Wahrscheinlichkeit P(O/W) einer Merkmalsvektorfolge O unter der Bedingung eines bestimmten Wortes W eingesetzt. Bei den beschriebenen modifizierten HMMs wird angenommen, daß eine lokale Emissionswahrscheinlichkeit $b_{q_t}$ eines Zustands $q_t$ zum Zeitpunkt t von den bisherigen p Merkmalsvektoren abhängt:

$$b_{q_t} := P\left(O_t \big| O_{t-1}, \ldots, O_{t-p}, q_t\right) \qquad (1).$$

Diese Emissionswahrscheinlichkeit $b_{q_t}$ wird angenähert durch eine geeignete Kombination $P'(O_t)$ zweier getrennt modellierter Wahrscheinlichkeitsdichten:

$$P'\left(O_t\right) = P_1\left(O_t\right) \circ P_2\left(O_t\right) \qquad (2).$$

Es bezeichnet $P_1(O_t)$ die herkömmliche Emissionswahrscheinlichkeit, d.h. unter Vernachlässigung der Korrelation, während $P_2(O_t)$ die Korrelation der Merkmalsvektoren berücksichtigt:

$$P_1\left(O_t\right) = P\left(O_t \big| q_t\right) \qquad (3)$$

$$P_2\left(O_t\right) = P\left(O_t \big| O_{t-1}, \ldots, O_{t-p}\right) \qquad (4).$$

Der Ausdruck $P_1(O_t)$ ist durch eine normal verteilte Wahrscheinlichkeitsdichtefunktion

$$\mathcal{N}\left(\mu, \Sigma = I \cdot \sigma^2\right)$$

eines Hidden-Markov-Modell-Zustandes gegeben, wobei

$\mu$     einen Mittelwert,
$\Sigma$     eine Kovarianzmatrix, die in ihrer Hauptdiagonalen die Varianzen $\sigma^2$ enthält, und
$I$     eine Einheitsmatrix

bezeichnen.

Mit Hilfe eines linearen Prädiktors wird $P_2(O_t)$ abgeschätzt. Ein linearer Prädiktor ist eine geeignete Methode zur Bearbeitung einer Folge korrelierter Daten. Er kann eingesetzt werden, um einen Schätzwert für einen bestimmten Merkmalsvektors $O_t$ unter Berücksichtigung der p vorhergehenden Merkmalsvektoren $\{O_{t-1}, \ldots, O_{t-p}\}$ zu erhalten (vgl. [2]).

$$O_t = \hat{O}_t + \xi = \sum_{i=1}^{p} A_i O_{t-i} + \xi \qquad (5).$$

Dabei bezeichnen die Prädiktorkoeffizienten $A_i$ Matrizen, $\hat{O}_t$ ist ein Schätzwert eines realen Merkmalsvektors und $\xi$ ist ein Fehlervektor, der durch die Prädiktion entsteht.

Ein weiterer wichtiger Schritt, eine lineare Diskriminanzanalyse (vgl. [5]), wird nach der Merkmalsextraktion angewandt, so daß die einzelnen Komponenten des Merkmalsvektors dekorreliert sind und keine Abhängigkeiten zwischen unterschiedlichen Dimensionen des Merkmalsvektors berücksichtigt werden müssen. Daher kann der Prädiktor jede Komponente einzeln behandeln, die Prädiktorkoeffizienten Ai werden zu Diagonalmatrizen.

Die Zufallsvariable $O_t$ ist die Summe zweier Zufallsvariablen $\hat{O}_t$ und $\xi$. Damit ist die Wahrscheinlichkeit von $O_t$ durch eine Faltung der zugehörigen Wahrscheinlichkeitsdichtefunktionen $P_{\hat{O}_t}$ und $P_\xi$ zu bestimmen. Da $\hat{O}_t$ aus dem Prädiktor hervorgeht, ist die zugehörige Wahrscheinlichkeitsdichtefunktion ein Dirac-Impuls mit

$$P_{\hat{O}_t}(o_t) = \delta(o_t - \hat{o}_t) \qquad (6).$$

Der verbleibende Prädiktionsfehler

$$\xi = O_t - \hat{O}_t \qquad (7)$$

kann als normalverteilte Zufallsvariable angenommen werden mit einem Mittelwert

$$\mu\xi = 0 \qquad (8)$$

und es ergibt sich somit für seine Wahrscheinlichkeit

$$P_\xi = \frac{1}{\sqrt{(2\pi)^N |\Sigma_\xi|}} \cdot e^{-\frac{1}{2}\xi^T \Sigma_\xi^{-1} \xi} \qquad (9).$$

Wegen der dekorrelierten Vektorkomponenten ist die Kovarianzmatrix $\Sigma_\xi$ wieder eine Diagonalmatrix. Die sich ergebenden Emissionswahrscheinlichkeiten des Merkmalsvektors $O_t$ können ausgedrückt werden als

$$\begin{aligned}
P_2(o_t) &= P\left(o_t \mid o_{t-1}, \ldots, o_{t-p}\right) \\
&= P_{\hat{O}_t}(o_t) * P_\xi(o_t) \qquad (10). \\
&= P_\xi(o_t - \hat{o}_t) = P_\xi(\xi)
\end{aligned}$$

Durch Benutzung eines linearen Prädiktors in der beschriebenen Art kann eine Emissionswahrscheinlichkeit eines Merkmalsvektors bestimmt werden, die die zeitliche Korrelation vorhergehender Merkmalsvektoren mitberücksichtigt.

Kombinierte Wahrscheinlichkeitsdichtefunktionen

Gemäß der bekannten Theorie (vgl. [3]) gibt es zwei unterschiedliche Ansätze zur Kombination von Wahrscheinlichkeitsdichtefunktionen. Der erste Ansatz kann beschrieben werden als eine gewichtete Summe von Teilwahrscheinlichkeitsdichtefunktionen, daraus ergibt sich eine multimodale Wahrscheinlichkeitsdichtefunktion. Die zweite Möglichkeit berechnet die verknüpfte Wahrscheinlichkeitsdichte als eine gewichtete Multiplikation der einzelnen Wahrscheinlichkeitsdichtefunktionen. Nach einer Normalisierung erhält man eine unimodale Wahrscheinlichkeitsdichtefunktion.

Hier wird ein anderer Ansatz verfolgt. Die kombinierte Wahrscheinlichkeitsdichtefunktion wird angenommen als eine Gauß-Verteilung, deren Mittelwert und Standardabweichung berechnet werden durch Bestimmung von Mittelwert und Standardabweichung einer gewichteten Summe einzelner Wahrscheinlichkeitsdichten. Dabei werden besondere Eigenheiten des zugrundeliegenden akustischen Modells berücksichtigt. Die gewöhnliche Emissionswahrscheinlichkeit eines Zustandes eines Hidden-Markov-Modells wird von einer multimodalen Wahrscheinlichkeitsdichtefunktion modelliert, wobei alle Moden diagonale Kovarianzmatrizen aufweisen und alle Varianzen gleich sind, d.h. $\Sigma = I \cdot \sigma^2$. Weiterhin hat die Emissionswahrscheinlichkeit des linearen Prädiktors eine diagonale Kovarianzmatrix, deren jede Varianz gleichgesetzt wird, d.h. $\Sigma_\xi = I \cdot \sigma^2_\xi$.

Gemäß diesen Annahmen werden die gewichtete Summe der Wahrscheinlichkeitsdichtefunktionen einer Mode (gegeben durch

$$\mathcal{N}(\mu, \Sigma)$$

) und der lineare Prädiktor (gegeben durch

$$\mathcal{N}(\hat{o}_t, \Sigma_\xi)$$

) berechnet als eine zweimodale Wahrscheinlichkeitsdichtefunktion.

$$(1 - c) \cdot \mathcal{N}(\mu, \Sigma) + c \cdot \mathcal{N}(\hat{o}_t, \Sigma_\xi) \qquad (11).$$

Um eine einmodale Wahrscheinlichkeitsdichte zu erhalten wird diese gewichtete Summe mit $0 < c < 1$ angenähert durch eine einzelne Gauß-Verteilung, indem ein Mittelwertsvektor $\mu'$ und eine globale Varianz $\Sigma' = I \cdot \sigma'^2$ dieser Summe bestimmt werden als

$$\mu' = (1 - c) \cdot \mu + c \cdot \hat{O}_t \qquad (12)$$

$$\sigma'^2 = (1 - c) \cdot \sigma^2 + c\sigma_\xi^2 + (1 - c) \cdot c \cdot (\mu - \hat{o}_t)^2 \qquad (13)$$

Dadurch ist die Emissionswahrscheinlichkeit der korrelierten Hidden-Markov-Modelle durch eine Gauß-Verteilung mit Mittelwert $\mu'$ und Varianz $\Sigma'$ gegeben. Die kombinierte Wahrscheinlichkeit wird berechnet durch Ersetzen des Mittelwertes und der Varianz aller Moden aller Zustände gemäß Gleichung (12) und Gleichung (13).

Eine weiterer Schritt besteht darin, die Veränderungen der Varianzen unberücksichtigt zu lassen. Die Varianz jedes einzelnen Hidden-Markov-Modells wird als konstant angenommen, indem

$$\Sigma' = \Sigma \qquad (14)$$

gesetzt wird.

So wird nur eine Veränderung der Mittelwerte durchgeführt und die kombinierte Wahrscheinlichkeitsdichtefunktion wird erhalten als Gauß-Verteilung mit einem verschobenen Mittelwertsvektor gemäß Gleichung (12).

Die Kombination von $P_1(O_t)$ und $P_2(O_t)$ erfolgt durch Bildung einer gewichteten Summe, deren Mittelwert $\mu'$ und deren Varianz $\sigma'^2$ durch Gleichung (12) und Gleichung (13) bestimmt sind. Vernachlässigt man bei der Emissionsberechnung im negativen logarithmischen Bereich den Einfluß der Varianzen, so erhält man als eine Distanz zwischen einem Merkmalsvektor $O_t$ und dem Mittelwert $\mu'$ zu

$$distance = \left( \underbrace{(1 - c) \cdot \mu}_{\tilde{\mu}} + \underbrace{c \cdot \hat{O}_t - O_t}_{-\tilde{O}_t} \right)^2 \qquad (15)$$

Diese Gleichung läßt sich als ein Abstand eines teilweise dekorrelierten Merkmalsvektors $\tilde{O}_t$ und eines gleichzeitig transformierten herkömmlichen Hidden-Markov-Modell-Prototypen $\tilde{\mu}$ interpretieren.

Somit lassen sich für alle Wörter zwei Konfidenzmaße $x_1$ und $x_2$, also jeweils ein Maß für eine Wahrscheinlichkeit dafür, daß ein Wort vom Spracherkennungssystem richtig erkannt wird, bestimmen. Für ein erkanntes Wort wird ein Konfidenzmaß bestimmt, mit Hilfe dessen eine Entscheidung, ob das Wort akzeptiert oder zurückgewiesen wird, getroffen wird. Dabei basieren $x_1$ auf Emissionswahrscheinlichkeiten herkömmlicher Hidden-Markov-Modelle und $x_2$ auf korreliert modellierten Emissionswahrscheinlichkeiten:

$$x_1 = \frac{1}{t_2 - t_1 + 1} \cdot \sum_{t=t_1}^{t_2} - \log\left( \frac{P(O_t|q_t)}{P(O_t|\overline{q_t})} \right) \qquad (16)$$

$$x_2 = \frac{1}{t_2 - t_1 + 1} \cdot \sum_{t=t_1}^{t_2} - \log\left( \frac{P'(O_t|q_t, O_{t-1}, \ldots, O_{t-p})}{P(O_t|\overline{q_t})} \right) \qquad (17),$$

wobei

$t_1$ einen Startzeitpunkt eines Wortes und
$t_2$ einen Endzeitpunkt eines Wortes

bezeichnen.

Eine Normierungswahrscheinlichkeit

$$P\left(O_t|\overline{q_t}\right),$$

die als eine Emissionswahrscheinlichkeit eines imaginären "Anti-Zustands" interpretiert werden kann (vgl. [4]) ist hier durch den Mittelwert der n besten Phonembewertungen gegeben

$$- \log P\left(O_t|\overline{q_t}\right) = \frac{1}{n} \sum_n \left( - \log P\left(O_t|q_n\right) \right) \qquad (18).$$

Der endgültige "Score" des hypothetisierten Wortes, der mit bestimmten Rückweisungsschwellen verglichen wird, ergibt sich als lineare Kombination der beiden Konfidenzmaße zu

$$Score = w_1 x_1 + w_2 x_2 \tag{19}.$$

Dabei ist das Maß "Score" ein endgültiges Konfidenzmaß und für die Rückweisungsentscheidung maßgeblich, wobei insbesondere ein Vergleich mit einer vorgegebenen Rückweisungsschwelle erfolgt. $w_1$ und $w_2$ bezeichnen vorgegebene Gewichte (z.B. $w_1 = w_2 = 0{,}5$).

Literaturverzeichnis:

[1] N. Haberland et al.: "Sprachunterricht - Wie funktioniert die computerbasierte Spracherkennung?", c't - Magazin für Computertechnik - 5/1998, Heinz Heise Verlag, Hannover, 1998, Seiten 120 bis 125.

[2] J.D. Markel et al.: "Linear Prediction of Speech", Springer Verlag, New York, 1980, 2nd edition, Seiten 10 bis 16

[3] C. Genest et al.: "Combining Probability Distributions: A critic and an anotated bibliography", Statistical Science, 1(1), 1986, Seiten 114-148.

[4] Junkawitsch et al: "Efficient method for detecting key words in continuous speech", Proc. Eurospeech, Vol.1, 1997, Seiten 259-262.

[5] G. Ruske: "Automatische Spracherkennung", Oldenbourg Verlag, München 1988, Seiten 67-86.

**Patentansprüche**

1. Verfahren zur Erkennung gesprochener Sprache durch einen Rechner,

    a)bei dem aus der gesprochenen Sprache ein digitalisiertes Sprachsignal bestimmt wird,
    b)bei dem auf dem digitalisierten Sprachsignal eine Signalanalyse durchgeführt wird, woraus Merkmalsvektoren zur Beschreibung des digitalisierten Sprachsignals hervorgehen,
    c)bei dem eine globale Suche zur Abbildung der Merkmalsvektoren auf eine in modellierter Form vorliegende Sprache durchgeführt wird, wobei Phoneme der Sprache durch ein modifiziertes Hidden-Markov-Modell beschrieben sind,
    d) bei dem das modifizierte Hidden-Markov-Modell eine. bedingte Wahrscheinlichkeit eines Merkmalsvektors in Abhängigkeit von einer vorgegeben Anzahl vorhergehender Merkmalsvektoren umfaßt,
    e)bei dem die bedingte Wahrscheinlichkeit durch eine Kombination zweier getrennt modellierter Wahrscheinlichkeiten angenähert wird,
    f)bei dem die erste getrennt modellierte Wahrscheinlichkeit eine Korrelation der Merkmalsvektoren vernachlässigt, während die zweite getrennt modellierte Wahrscheinlichkeit die Korrelation der Merkmalsvektoren berücksichtigt,
    g)bei dem die gesprochene Sprache erkannt wird, indem eine erkannte Wortfolge von der globalen Suche bereitgestellt wird.

2. Verfahren nach Anspruch 1,
    bei dem das modifizierte Hidden-Markov-Modell zusätzlich eine bedingte Wahrscheinlichkeit eines jeweils aktuellen Zustands umfaßt.

3. Verwendung des Verfahrens nach Anspruch 1 oder 2 zur Erkennung von Schlüsselwörtern in der gesprochenen Sprache.

4. Verwendung des Verfahrens nach Anspruch 1 oder 2 zur automatischen rechnergestützten Dialogführung.

5. Anordnung zur Erkennung gesprochener Sprache,

    a)mit einer Einheit zur Signalanalyse, die derart eingerichtet ist, daß aus der gesprochenen Sprache Merkmalsvektoren bestimmbar sind,

b)mit einer Einheit zur globalen Suche, die derart eingerichtet ist, daß die Merkmalsvektoren auf eine in modellierter Form vorliegende Sprache abbildbar ist,

c)mit einer Prozessoreinheit, die derart eingerichtet ist; daß ein modifiziertes Hidden-Markov-Modell eine bedingte Wahrscheinlichkeit für einen aktuellen Merkmalsvektor in Abhängigkeit von einer vorgegeben Anzahl vorhergehender Merkmalsvektoren umfaßt, wobei die bedingte Wahrscheinlichkeit durch eine Kombination zweier getrennt modellierter Wahrscheinlichkeiten angenähert wird, die erste getrennt modellierte Wahrscheinlichkeit eine Korrelation der Merkmalsvektoren vernachlässigt, während die zweite getrennt modellierte Wahrscheinlichkeit die Korrelation der Merkmalsvektoren berücksichtigt, und mit dem modifizierten Hidden-Markov-Modell eine Abbildung der Merkmalsvektoren auf die in modellierter Form vorliegende Sprache durchführbar ist.

**6.** Anordnung nach Anspruch 5,
bei der die Prozessoreinheit derart eingerichtet ist, daß das modifizierte Hidden-Markov-Modell zusätzlich eine bedingte Wahrscheinlichkeit eines jeweils aktuellen Zustands umfaßt.

**Claims**

**1.** Method for recognizing spoken language by means of a computer,

a) in which a digitized spoken language signal is determined from the spoken language,
b) in which a signal analysis is carried out on the digitized spoken language signal, from which feature vectors for describing the digitized spoken language signal are obtained,
c) in which a global search for mapping the feature vectors onto a language which is present in modelled form is carried out, phonemes of the language being described by means of a modified hidden Markov model,
d) in which the modified hidden Markov model comprises a conditional probability of a feature vector as a function of a predefined number of preceding feature vectors,
e) in which the conditional probability is approximated by a combination of two separately modelled probabilities,
f) in which the first separately modelled probability neglects a correlation of the feature vectors, while the second separately modelled probability takes into account the correlation of the feature vectors,
g) in which the spoken language is recognized by making available a recognized word sequence from the global search.

**2.** Method according to Claim 1, in which the modified hidden Markov model additionally comprises a conditional probability of a respective current state.

**3.** Use of the method according to Claim 1 or 2 for recognizing key words in the spoken language.

**4.** Use of the method according to Claim 1 or 2 for automatic computer-supported execution of dialogues.

**5.** Arrangement for recognizing spoken language,

a) having a unit for signal analysis which is configured in such a way that feature vectors can be determined from the spoken language,
b) having a unit for global searching which is configured in such a way that the feature vectors can be mapped onto a language which is present in modelled form,
c) having a processor unit which is configured in such a way that a modified hidden Markov model comprises a conditional probability for a current feature vector as a function of a predefined number of preceding feature vectors, the conditional probability being approximated by a combination of two separately modelled probabilities, the first separately modelled probability neglecting a correlation of the feature vectors, while the second separately modelled probability takes into account the correlation of the feature vectors, and mapping of the feature vectors onto the language which is present in modelled form can be carried out with the modified hidden Markov model.

**6.** Arrangement according to Claim 5, in which the processor unit is configured in such a way that the modified hidden Markov model additionally comprises a conditional probability of a respective current state.

# EP 1 078 355 B1

**Revendications**

1. Procédé destiné à la reconnaissance de la parole articulée par un ordinateur

   a) dans lequel, à partir de la parole articulée, on détermine un signal de parole numérisé,
   b) dans lequel on procède, sur le signal de parole numérisé, à une analyse du signal, dont il ressort des vecteurs de caractéristiques destinés à décrire le signal de parole numérisé,
   c) dans lequel on procède à une recherche globale destinée à reproduire les vecteurs de caractéristiques sur un langage disponible sous une forme modélisée, des phonèmes du langage étant décrits par un modèle caché de Markov modifié,
   d) dans lequel le modèle caché de Markov modifié comporte une probabilité conditionnelle d'un vecteur de caractéristiques en fonction d'un nombre prédéterminé de vecteurs de caractéristiques antérieurs,
   e) dans lequel on fait une approche d'une probabilité conditionnelle par une combinaison de deux probabilités modélisées séparément,
   f) dans lequel la première probabilité modélisée séparément néglige une corrélation des vecteurs de caractéristiques, alors que la deuxième probabilité modélisée séparément tient compte de la corrélation des vecteurs de caractéristiques,
   g) dans lequel la parole articulée est reconnue par le fait que la recherche globale offre une suite de mots reconnus.

2. Procédé selon la revendication 1
   dans lequel le modèle caché de Markov modifié comporte, en plus, une probabilité conditionnelle d'un état, dans chaque cas, actuel.

3. Utilisation du procédé selon la revendication 1 ou 2 destiné à la reconnaissance de mots-clés dans le langage articulé.

4. Utilisation du procédé selon la revendication 1 ou 2 destiné à la conduite automatique d'un dialogue assistée par ordinateur.

5. Dispositif destiné à la reconnaissance d'un langage articulé comportant

   a) une unité destinée à l'analyse de signaux et conçue de telle sorte qu'il est possible de déterminer, à partir du langage articulé, des vecteurs de caractéristiques,
   b) une unité destinée à la recherche globale et conçue de telle sorte que les vecteurs de caractéristiques peuvent être reproduits sur un langage disponible sous une forme modélisée,
   c) une unité à processeur conçue de telle sorte qu'un modèle caché de Markov modifié comporte une probabilité conditionnelle pour un vecteur actuel de caractéristiques en fonction d'un nombre prédéterminé de vecteurs de caractéristiques antérieurs, la probabilité conditionnelle étant approchée par une combinaison de deux probabilités modélisées séparément, la première probabilité modélisée séparément négligeant une corrélation des vecteurs de caractéristiques, alors que la deuxième probabilité modélisée séparément tient compte de la corrélation des vecteurs de caractéristiques, et une reproduction des vecteurs de caractéristiques sur le langage disponible sous une forme modélisée pouvant être exécutée avec le modèle caché de Markov modifié.

6. Dispositif selon la revendication 5
   dans lequel l'unité à processeur est conçue de telle sorte que le modèle caché de Markov modifié comporte, en plus, une probabilité conditionnelle d'un état, dans chaque cas, actuel.